# EUROPEAN PATENT SPECIFICATION

(11) **EP 1 880 780 B1**
(45) Date of publication and mention of the grant of the patent: **16.01.2013**
(21) Application number: 07013041.4
(22) Date of filing: 03.07.2007
(51) Int. Cl.: B21K 1/46, B21C 25/08, F16B 35/00, B21K 1/44, B21K 1/56, B21C 23/14

(54) **Bolt-dedicated shaped product extrusion apparatus and method**
Verfahren und Vorrichtung zum Strangpressen einer Bolzenvorform
Machine et procédé d'extrusion d'une préforme de boulon

(30) Priority: 18.07.2006 JP 2006195648
(43) Date of publication of application: 23.01.2008
(73) Proprietor: KABUSHIKI KAISHA KOBE SEIKO SHO, Kobe-shi, Hyogo 651-8585 (JP)
(72) Inventor: Sakae, Akira, Kobe-shi Hyogo 651-2271 (JP)
(74) Representative: Müller-Boré & Partner Patentanwälte

(56) References cited:
- WO-A-03/054243
- WO-A-2007/055073
- FR-A- 1 110 717
- GB-A- 505 090
- JP-A- 1 099 740
- JP-A- 7 011 412
- JP-A- 2006 104 561
- US-A- 5 557 962

## Description

The present invention relates to a bolt-dedicated shaped product forming apparatus, and method.

The publication GB-A-505 090 discloses a method and an apparatus for the extrusion of products with varying hexagonal cross-section. It represents the closest state of the art for the subject-matter of independent claims 1 and 2.

Conventional steel-bolt manufacturing methods are also known (see, for example, Japanese Unexamined Patent Application Publication No. 07-11412 and No. 01-99740, which hereinbelow will be referred to as "Patent Publications 1 and 2" respectively).

Patent Publication 1 discloses that the steel-bolt manufacturing method includes rolling, annealing, lubrication film treating, drawing, and bolt forming steps. The rolling step forms a rod material by rolling a steel ingot, the annealing step anneals and softens the rod material, the lubrication film treating step forms a lubrication film on a surface of the annealed rod, the drawing step performs rod-drawing processing by drawing the rod through a die, and the bolt forming step forms a screw thread portion on the rod material through a rolling process, whereby a steel bolt is formed. Patent Publication 2 discloses that, in a bolt forming step, a rod material is cold press formed by using a punch and a die to thereby form a bolt head having a predetermined shape.

The steel bolt formed by the manufacturing method disclosed in Patent Publication 1, 2, does not have a so high specific strength (rate of the strength to unit mass density). As such, the weight has to be increased to obtain a predetermined strength, thereby offering the problem of making it difficult to implement weight reduction.

In this connection, Japanese Unexamined Patent Application Publication No. 2006-104561 discloses a heat resistant aluminium alloy material. The heat resistant aluminium alloy material has a relatively high strength. As such, using the material for bolts offers the probability of enabling bolts having high strength and relatively light weight bolts to be obtained, thereby offering a solution of the problem with the steel bolts as disclosed in Patent Publication 1, 2. Nevertheless, however, in the event of forming a bolt by using the heat resistant aluminium alloy material in steps similar to those of the conventional steel-bolt manufacturing method, difficulties arise to sufficiently form the bolt. More specifically, in the forming of the bolt, cracking occurs on the material in the drawing step in which, generally, cold drawing is performed. Further, even when a bolt material can be formed without cracking during the drawing process, another problem takes place. The problem is that cracking occurs on the material during press forming of a bolt head and rolling process of a screw thread portion in which large forces are imposed on the material in association with plastic deformation.

The present invention is made to solve problems such as described above. One object of the invention is to enable heat resistant aluminium alloy bolts to be formed while restraining occurrence of cracking in manufacturing steps.

In order to achieve the object, the bolt manufacturing method includes a hot extrusion step using a heat resistant aluminium alloy, for forming a bolt-dedicated shaped product; said bolt-dedicated shaped product can then be cut to form a bolt(s) (or a "heat resistant aluminium alloy bolt(s)").

Because of the hot extrusion step, unlike with cold drawing, the bolt-dedicated shaped product can be formed from the heat resistant aluminium alloy enhanced in flexibility by being heated. Thereby, cracking can be restrained from occurring on the shaped product during forming thereof. Further, because of the cutting process, large forces can be prevented from exerting on the material in association with plastic deformation unlike the case where the bolt head is press formed and the screw portion is roll formed. Thereby, cracking can be refrained from occurring on the material in association with such large forces exerted thereon. Consequently, a heat resistant aluminium alloy bolt can be formed while restraining occurrence of cracking on the material.

According to the invention the bolt-dedicated shaped product is formed into a regular polygonal columnar shape during the extruding step. The bolt head can then be formed by using the regular polygonal columnar shape as it is, thus eliminating the step of cutting the bolt head. Hence reduction of the material yield can be restrained from being caused by the cutting process.

Preferably, a cutting-off step includes cutting off the shaped product in units of a predetermined length to form a plurality of semi-formed materials, wherein, in the cutting step, the materials are each cut to form the heat resistant aluminium alloy bolt. In the configuration thus formed, many materials can be formed from a long shaped product in the cutting-off step, such that the productivity for the materials can be improved as compared to the case where the material corresponding to the length of the bolt is extruded and formed one by one. Consequently, the productivity for the bolts can be improved.

Preferably, in the extruding step, the shaped product is formed into a shape including sets of first to third portions repetitiously arranged along an extrusion direction, wherein the first portion is formed to be regular polygonal columnar, the second portion is formed in a manner that a width in one direction in a cross section perpendicular to the extrusion direction is smaller than a width in the one direction of the first portion, and the third portion is formed to integrally connect between the first and second portions and to have a width in the one direction reducing along a direction from the side of the first portion to the side of the second portion; in the cutting-off step, the shaped product is cut off at the first and second portions to thereby form the plurality of materials each including a regular polygonal columnar portion corresponding to the first portion and the third and second portions continued to the regular polygonal columnar portion; and in the cutting step, the regular polygonal columnar portion of the respective material is used as a bolt head, and the second and third portions of the respective material are cutting-processed, thereby to form the heat resistant aluminium alloy bolt.
In the configuration thus formed, the regular polygonal columnar first portion formed by the extrusion can be used as it is as the bolt head. Consequently, the step of performing the cutting process of the bolt head can be eliminated from the manufacturing steps, and hence reduction of the material yield can be restrained from being caused by the cutting process. Further, the bolt can be formed by the cutting process of the second and third portions that are smaller than the first portion used as the bolt head in the width in the one direction in the cross section perpendicular to the extrusion direction. As such, compared to a case where the bolt is formed by cutting process of a material having a constant width identical to the first portion along the extrusion direction, the amount of cutting can be reduced. Thereby, the reduction in the material yield can be even more restrained.

A bolt cut from a bolt-dedicated shaped product obtained by the present invention is a heat resistant aluminium alloy bolt. For the bolt, cracking can be prevented from occurring during the manufacture, and a high specific strength can be obtained. Thereby, for the bolt, while the predetermined strength is secured, weight reduction can be accomplished.

As a prerequisite condition, a bolt-dedicated shaped product according to the present invention is used and includes sets of first to third portions repetitiously provided along the extrusion direction.

The bolt-dedicated shaped product includes regular polygonal columnar first portions. When a plurality of bolt-dedicated materials are formed by cutting off at the respective first portions, the respective first portion can be used as it is as the bolt head. Consequently, the step of performing the cutting process of the bolt head can be eliminated from the manufacturing steps, and hence the reduction of the material yield can be restrained from being caused by the cutting process. Further, the bolt can be formed by cutting the second and third portions (which are smaller than the first portion used as the bolt head) in the width in the one direction in the cross section perpendicular to the extrusion direction. Consequently, compared to a case where the bolt is formed by cutting process of a material having a constant width identical to the first portion along the extrusion direction, the amount of cutting can be reduced. Thereby, the reduction in the material yield can be even more restrained.

As a prerequisite condition, a bolt-dedicated shaped product forming apparatus according to claim 1 is used for forming the bolt-dedicated shaped product described above.

The pair of movable dies of the bolt-dedicated shaped product forming apparatus are disposed, apart from one another at a distance variable in association with movement thereof along the respective guide grooves, thereby clamping the shaped product from both sides. A regular polygonal column corresponding to a first portion is extruded in the state where the pair of movable dies are stopped at a predetermined position. Next, a third portion can be formed while the pair of movable dies is being moved along the guide grooves in the direction of reducing the distance therebetween; and thereafter, a second portion can be formed in the manner that the extrusion thereof is performed by stopping the movable dies. Alternatively, the third and first portions can be continually extruded from the second portion in the steps reversed in the order. Consequently a shaped product including a repetitious sets of first portion, third portion, and second portion provided along the extrusion direction can be easily formed by repeating the forming steps described above.

As a prerequisite condition, a bolt-dedicated shaped product forming method according to claim 2 is used to form the bolt-dedicated shaped product described above. The bolt-dedicated shaped product forming method uses a forming apparatus according to claim 1.

According to said method, after the first portion has been extruded in the state of the pair of movable dies stopped at the predetermined position, the third portion is extruded while the pair of movable dies is being moved along the guide grooves in the direction of reducing the distance therebetween; and thereafter, the second portion is extruded formed in the manner that the extrusion thereof is performed by stopping the movable dies. Thereby, the first portion, the third portion wherein the width in the one direction reduces in the direction from the first portion, and the second portion integrally connecting or extending to the third portion can be easily, continually formed. Consequently, the shaped product including the repetitious sets of the first portion, third portion, and second portion provided along the extrusion direction can be easily formed by repeating the forming steps described above.

In the bolt-dedicated shaped product forming method described above, a variation rate of the width of the third portion may be varied by varying a movement speed of the pair of movable dies. In the configuration thus formed, shaped products different from one another in the variation rate of the width in the one direction in the third portion can be formed, so that the sufficient degree of design freedom for the shaped product can be improved.

As described above, thanks to the present invention, the heat resistant aluminium alloy bolts can be formed while restraining cracking from occurring in the manufacturing steps.

In the accompanying drawings:
FIG. 1 is a perspective view showing the overall construction of a bolt in accordance with the present disclosure;
FIG. 2 is an explanatory view of a manufacturing process for the bolt of the present disclosure;
FIG. 3 is a perspective view showing a bolt-dedicated shaped product for use in a bolt manufacturing method in accordance with the present disclosure;
FIG. 4 is a schematic partially broken perspective view showing a major portion of a bolt-dedicated shaped product forming apparatus in accordance with present invention;
FIG. 5 is a perspective view showing a movable die provided in the forming apparatus shown in FIG. 4;
FIG. 6 is a view showing the state of a second portion of the shaped product shown in FIG. 3;
FIG. 7 is a view showing the state of a third portion in extrusion subsequent to the second portion shown in FIG. 6;
FIG. 8 is a view showing the state of a first portion in extrusion subsequent to the third portion shown in FIG. 7;
FIG. 9 is a view showing the state of the third portion in extrusion subsequent to the first portion shown in FIG. 8;
FIG. 10 is a view showing the state of the second portion in extrusion subsequent to the third portion shown in FIG. 9;
FIG. 11 is a correlation diagram showing the correlation between an extrusion time elapse and an extruded length in extrusion of the shaped product shown in FIG. 3; and
FIG. 12 is a perspective view showing a material used in the bolt manufacturing method in accordance with the present disclosure.

Preferred embodiments of the present disclosure will be described below with reference to the accompanying drawings.

### (First Embodiment)

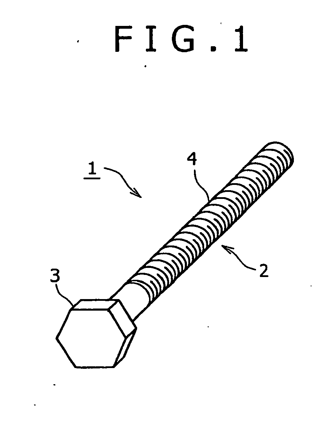

FIG. 1 is a perspective view showing the overall construction of a bolt 1 formed in accordance with a first embodiment of the present disclosure. The bolt 1 is formed of a heat resistant aluminium alloy, and includes an axial portion 2 having a substantially round columnar shape, and a bolt head 3 on one axial end portion of the axial portion 2 having a regular hexagonal columnar shape and integrally formed to the one end side of the axial portion 2 in the axial direction. A screw portion 4 is formed in a predetermined range of from the other axial end side to the one axial end side of the axial portion 2.

The heat resistant aluminium alloy used as the material of the bolt 1 has superior toughness, wear resistance, and fatigue resistance even at a high temperature of near 300°C. The heat resistant aluminium alloy further has a 1.6--3.0 times higher specific strength as compared to steel materials.
The heat resistant aluminium alloy contains an aluminium-base alloy structure composed of about 50% to about 90% intermetallic compound phase in terms of the volume fraction (vf) and a metal matrix formed as the balance.
The heat resistant aluminium alloy has a composition that contains three elements selected from among Cr, Fe, Ti, Mn, V, and Si as elements that forms the intermetallic compound phase, in which a total content of the selected three elements is in the range of about 15 mass % to about 50 mass %.

Preferably, the intermetallic compound phase has a composition containing about 5 mass % to about 30 mass % Cr, about 1 mass % to about 20 mass % Fe, and about 1 mass % to about 15 mass % Ti, and is any one of Al-Cr, Al-Fe, and Al-Ti systems or types. According to the configuration described above, the high temperature fatigue property of the heat resistant aluminium alloy can be even more improved.

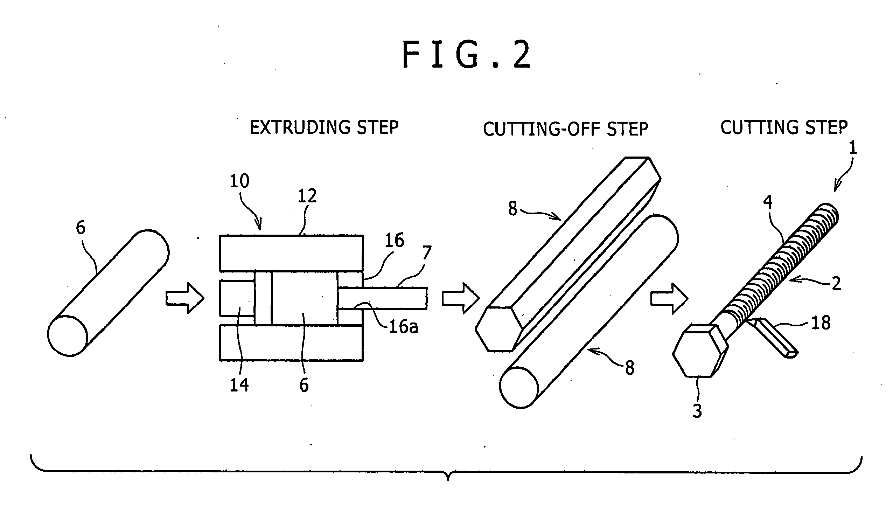

FIG. 2 shows a manufacturing process for the bolt 1 of the heat resistant aluminium alloy (or, "heat resistant aluminium alloy bolt 1," hereinbelow) in accordance with the first embodiment. The manufacturing process sequentially performs an extruding, cutting, and cutting-off steps to form the bolt 1.

First, in the extruding step, a heat resistant aluminium alloy billet 6 is loaded into a forming apparatus 10, in which a regular hexagonal columnar or round columnar shaped product 7 is formed by hot extrusion (forming). In the hot extrusion, the billet 6 is heated to a temperature in the range between about 350°C and about 500°C, and then is loaded into the forming apparatus 10. Thereby, the shaped product 7 extruded from the forming apparatus 10 has the temperature in the range between about 350°C and about 500°C.
The forming apparatus 10 includes a container 12, a stem 14, and a die 16 including a regular hexagonal or circular opening portion 16a. The billet 6 is loaded into the container 12, is compressed by the stem 14 in the container 12, and then is extruded therefrom. Thereby, a shaped product 7 is formed into the regular hexagonal columnar or round columnar shape corresponding to the shape of the opening portion 16a.

Subsequently, in the cutting-off step, the shaped product 7 is cut off in units of a predetermined length corresponding to the overall length of the bolt 1, and a plurality of regular hexagonal columnar or round columnar materials 8 (or, simply "materials," hereinbelow) are formed thereby.

Then, in the cutting step, the respective material 8 is cut by a bite 18 (cutting tool), and a respective bolt 1 is formed thereby. In this step, when forming the bolt 1 by using the regular hexagonal columnar material 8, a near portion of one axial end portion of the material 8 as it is formed can be used as the bolt head 3. However, when forming the bolt 1 by using the round columnar material 8, a near portion of one axial end of the material 8 is subjected to a cutting process to thereby form the regular hexagonal columnar bolt head 3. Then, a round columnar portion corresponding to the outer circumference of the axial portion 2 is formed by cutting an area of the material 8 corresponding to the axial portion 2 of the bolt 1. Thereafter, screw threads are formed by the cutting process (or, "cut-formed") on the circumferential surface of the round columnar portion to thereby form the screw portion 4. The bolt 1 is formed in the manner described above.

As described above, according to the first embodiment, the shaped product 7 is formed by hot extrusion in the extruding step. As such, unlike the case where the shaped product 7 is formed by cold drawing, the shaped product 7 can be formed from the billet 6 of the heat resistant aluminium alloy enhanced in flexibility by being heated. Thereby, cracking can be restrained from occurring on the shaped product 7 during forming thereof. Further, according to the first embodiment, the heat resistant aluminium alloy bolt 1 is formed by the cutting process of the material 8. Thereby, large forces can be prevented from exerting on the material 8 in association with plastic deformation unlike the case where the bolt head 3 is press formed and the screw portion 4 is roll formed. Thereby, cracking can be refrained from occurring on the material 8 in association with large forces exerted thereon. Consequently, according to the manufacturing method for the bolt 1, in the manufacturing steps, the bolt 1 of the heat resistant aluminium alloy can be formed while restraining occurrence of cracking on the shaped product 7 and the material 8. Further, a high specific strength can be obtained for the heat resistant aluminium alloy bolt 1 formed as described above, such that, while the predetermined strength is secured, weight reduction can be accomplished for the bolt 1.

Further, according to the present embodiment, when forming the shaped product 7 into the regular polygonal columnar shape, the bolt head 3 can be formed by using the regular polygonal columnar shape as it is. Thereby, the step of performing the cutting process of the bolt head 3 can be eliminated from the manufacturing steps, and hence reduction of the material yield can be restrained from being caused by the cutting process.

Further, according to the first embodiment, the plurality of the materials 8 are formed by cutting off the shaped product 7 in units of the predetermined length in the cutting-off step. In addition, the bolt 1 is formed by performing the cutting process of the respective materials 8. In the construction thus formed, many materials 8 can be formed from a long shaped product 7 in the cutting-off step, such that the productivity for the materials 8 can be improved as compared to the case where the material 8 corresponding to the length of the bolt 1 is extruded and formed one by one. Consequently, the productivity for the bolts 1 can be improved.

### (Second Embodiment)

A second embodiment will be described herebelow.
A manufacturing method of the second embodiment forms a bolt 1 having a similar construction as that of bolt 1 formed by the manufacturing method of the first embodiment (see FIG. 1). Similar to the manufacturing process for the bolt 1 shown in FIG. 2, the manufacturing process includes extruding, cutting-off, and cutting steps. However, the manufacturing process is different from that of the first embodiment in the shape of the shaped product (shaped product 27 in the second embodiment) to be formed in the extruding step and in the extruding method for the shaped product.

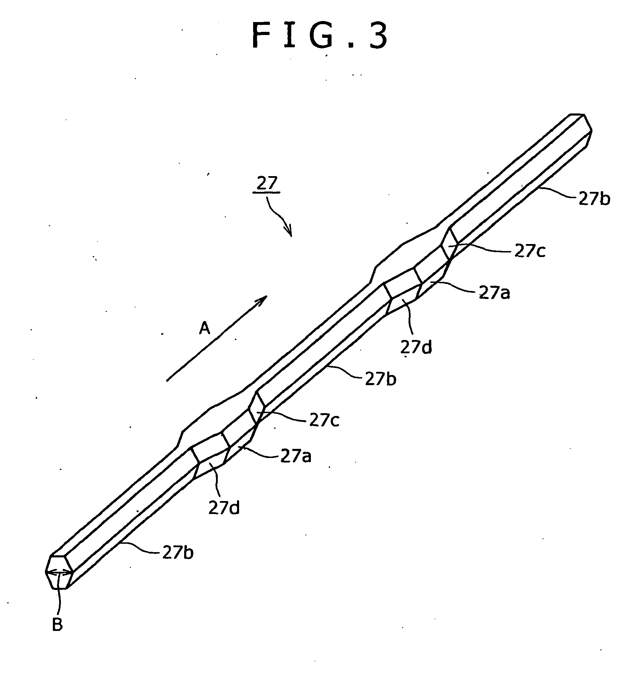

FIG. 3 shows part of the construction of a shaped product 27 to be formed in the extruding step. The shaped product 27 is formed by a hot extrusion forming process in the extruding step. In FIG. 3, the extrusion direction is shown by an arrow A ("direction A," hereinbelow). Unlike the case of the first embodiment, according to the second embodiment, in the extruding step, the shaped product 27 is formed into a shape with a non-constant or variable cross sectional width in a direction shown by B ("direction B," hereinbelow) of the cross section perpendicular to the extrusion direction.

More specifically, the shaped product 27 has a shape including repetitious sets of portions. One set of portions includes first to third portions 27a to 27c, 27d. The first portion 27a has a regular hexagonal columnar shape. The second portion 27b has a smaller cross sectional width in the direction B (shown in FIG. 3) than the cross sectional width of the first portion 27a. The third portion 27c, 27d integrally extends or connects between the first and second portions 27a and 27b and has the cross sectional width (in the direction B) reduced toward from the first portion 27a to the second portion 27b. Further, the second portion 27b is formed in the manner that the regular hexagonal columnar shape corresponding to the first portion 27a hereof the second portion 27b corresponding to that of the first portion 27a is reduced in the direction B (shown in FIG. 3).

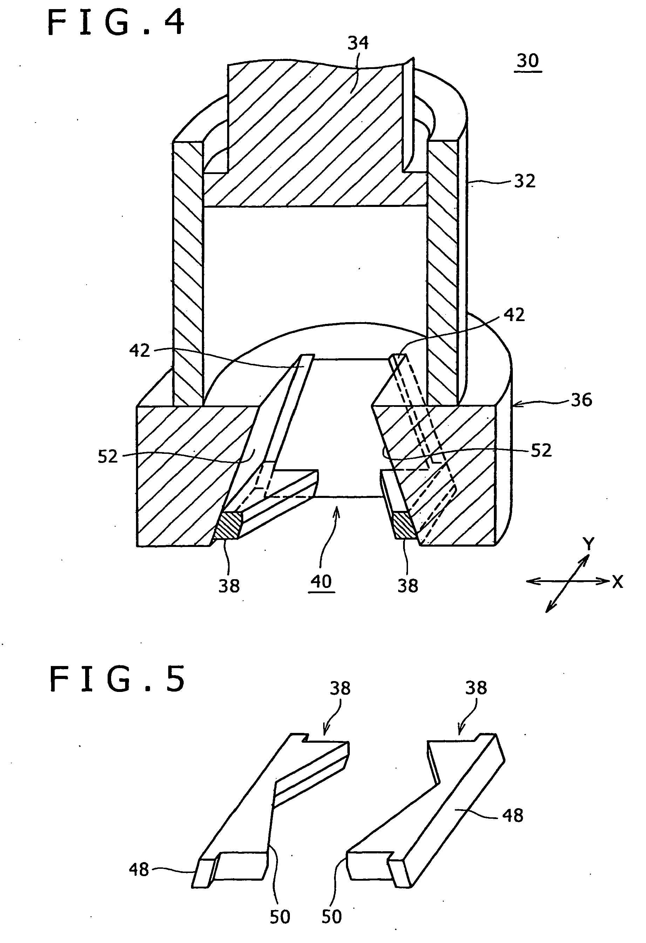

FIG. 4 schematically shows the construction of a forming apparatus 30 for forming the shaped product 27 in accordance with a manufacturing method of the present embodiment of the present invention. The forming apparatus 30 includes a container 32, a stem 34, a fixed die 36, and a pair of movable dies 38. A billet (not shown) is loaded into the container 32, in which the billet in the container 32 is compressed by the stem 34.

The fixed die 36 is fixed to an extrusion-side end portion of the container 32, and includes a shaping opening 40 extending through along the extrusion direction. The shaping opening 40 has a substantially rectangular cross section perpendicular to the extrusion direction.
The shaping opening 40 has a fixed width along one direction (direction Y shown in FIG. 4) in the cross section. Accordingly, a pair of inner faces of the shaping opening 40, which oppose the Y direction, are parallel to one another. Further, the shaping opening 40 has a width corresponding to a tilted plane along the direction perpendicular to the Y direction (X direction shown in FIG. 4) in the cross section, in which the width gradually increases (to be wider) along the extrusion direction.

The shaping opening 40 includes two (a pair of) guide grooves 42 that, respectively, guide the movable dies 38. The guide grooves 42 are provided in the end portion of the shaping opening 40 in the Y direction. The two guide grooves 42 are situated by being tilted with respect to the extrusion direction in such a manner that the distance between the two guide grooves 42 increases along the extrusion direction. Further, the respective two guide grooves 42 have the same tilt angle with respect to the extrusion direction.

With reference to FIG. 5, the pair of movable dies 38 are symmetric in shape to one another. The respective movable dies 38 are planar and include slide contact faces 48 and shaping faces 50. The movable dies 38 are each arranged in an attitude perpendicular to the extrusion direction in the shaping opening 40 of the fixed die 36, and is inserted in the guide groove 42 of the fixed die 36. The movable dies 38 are arranged opposite one another along the X direction (shown in FIG. 4). In this state, the slide contact faces 48 slide on guide surfaces 52 of the shaping opening 40, whereby the movable dies 38 are moved along the guide grooves 42. The movable dies 38 are thus provided movably along the direction tilted with respect to the extrusion direction.

The respective slide contact faces 48 are tilted with respect to the shaping faces 50 at the same angle as the tilt angle of the guide surfaces 52 with respect to the extrusion direction. The respective two shaping faces 50 of the movable dies 38 are opposite one another, in which the billet (not shown) is passed between the shaping faces 50, whereby the shaped product 27 is extruded. The two shaping faces 50 are each bent at an angle of 120° in a middle portion thereof in the long-side direction, thereby to form a shape corresponding to both-side angular portions of the first to third portions 27a to 27c, 27d positioned in the direction B (shown in FIG. 3).

The movable dies 38, respectively, are guided by the guide grooves 42 along the extrusion direction and are driven by a drive mechanism (not shown) along the vertical direction as viewed in FIG. 4. The drive mechanism (not shown) is configured to operate such that the respective movable dies 38 synchronously move while maintaining the state thereof opposing one another in the direction perpendicular to the extrusion direction. Thereby, the shaped product 27 can be excluded straight. The movable dies 38 are driven vertically (as viewed in FIG. 4) along the guide grooves 42, whereby the distance between the movable dies 38 is varied. More specifically, as the movable dies 38 are driven toward the upstream side along the extrusion direction, the distance between the movable dies 38 is reduced. On the other hand, however, as the pair of movable dies 38 is driven to the downstream side along the extrusion direction, the distance between the movable dies 38 is increased.

In the extruding step where the shaped product 27 is formed by the forming apparatus 30, the billet (not shown) of the heat resistant aluminium alloy heated to the temperature in the range between about 350°C and about 500°C is loaded into the container 32, and then is compressed by the stem 34 into the shaping opening 40. In this case, the billet (not shown) is supplied into the shaping opening 40 from the upper side (as viewed in FIG. 4), and then is compressed downward.

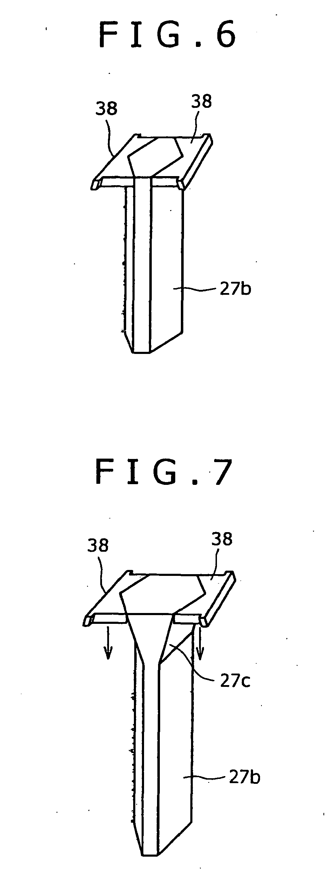

As shown in FIG. 6, when the pair of movable dies 38 is fixed at a predetermined position on the upstream side of the respective guide groove 42, the shaped product 27 is extruded with a fixed width. In this case, a hexagonal columnar second portion 27b having a small width is extruded. Then, when, as shown in FIG. 7, the pair of movable dies 38 is moved by the drive mechanism to the downstream side during extrusion, the distance between the movable dies 38 is gradually increased. Consequently, also the width of the shaped product 27 to be extruded is progressively increased. In this manner, a third portion 27c is formed.

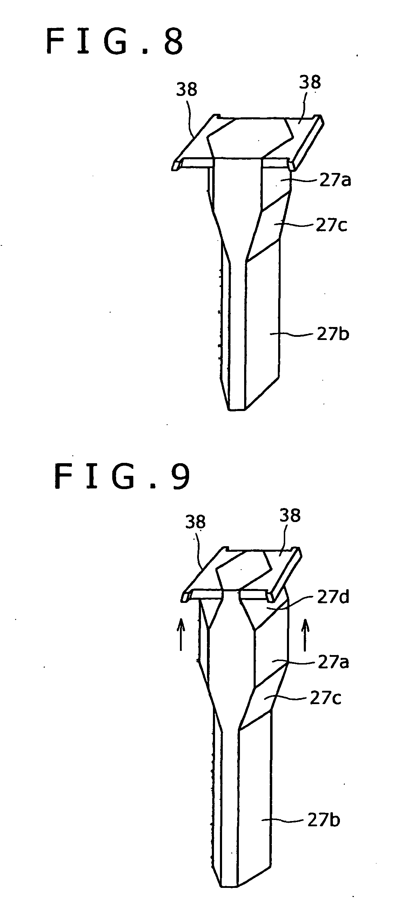

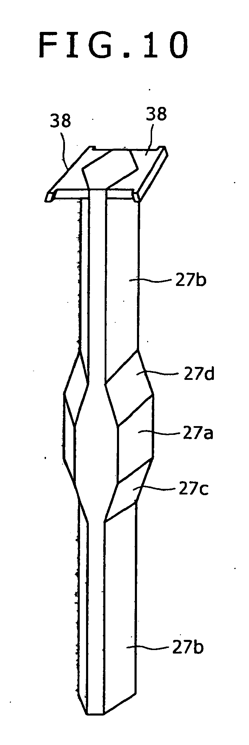

Thereafter, as shown in FIG. 8, when the pair of movable dies 38 is fixed at a predetermined position on the downstream side of the respective guide groove 42, the shaped product 27 is extruded with a fixed width. In this case, a regular hexagonal columnar first portion 27a having a large width is extruded. Then, when, as shown in FIG. 9, when the pair of movable dies 38 is moved to the upstream side of the respective guide groove 42, the distance between the movable dies 38 is gradually reduced. Consequently, the width of the shaped product 27 to be extruded is progressively reduced, whereby a third portion 27d is formed. Thereafter, when the pair of movable dies 38 is fixed at a predetermined position on the upstream side of the respective guide groove, a subsequent second portion 27b is extruded, as shown in FIG. 10. The series of the processes are repeatedly performed, thereby to extrude the shaped product 27 as shown in FIG. 3 is extruded.

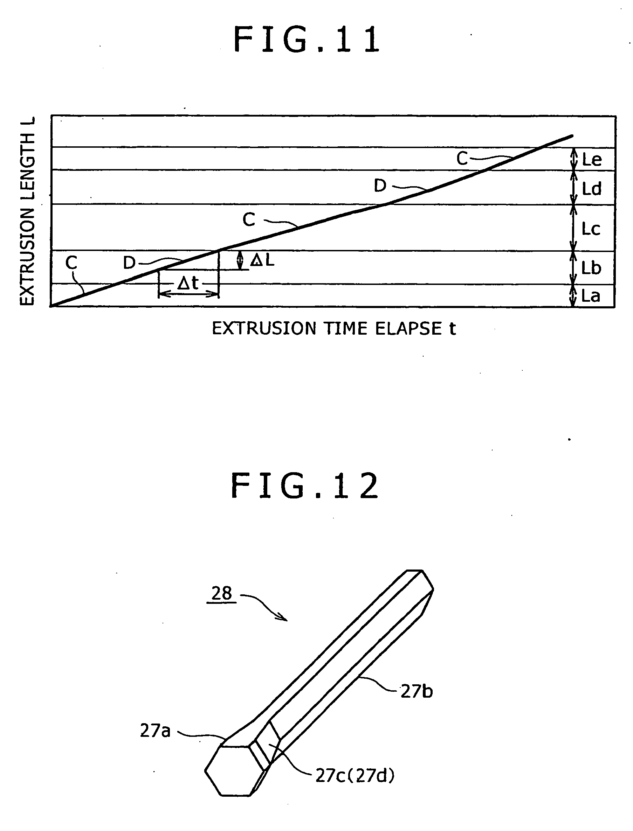

During extrusion, the stem 34 is moved at a speed being maintained constant. Accordingly, when the distance between the movable dies 38 is constant as in the extrusion of the first, second portion 27a, 27b, the speed of extrusion of the shaped product 27, as shown by character "C" in FIG. 11, is constant. As such, an extrusion length of the shaped product 27 can be calculated from an extrusion period of time. Thereby, the timing of starting the movement of the pair of movable dies 38 can be controlled in accordance with the extrusion period of time. In FIG. 11, by way of example, the extrusion length of each second portion 27b is represented by "La," "Le," and the extrusion length of each first portion 27a is represented by "Lc."

When, as in the extrusion of the respective third portion 27c, 27d, when the pair of movable dies 38 is progressively moved, an extrusion amount varies corresponding to the amount of movement of the set of movable dies 38 (see the portion D in FIG. 11). As such, the extrusion length of the respective third portion 27c, 27d is calculated in accordance with the amount of movement. The extrusion length (of the respective third portion 27c, 27d) can be obtained by the integration of extrusion lengths ΔL in units of elapse times Δt corresponding to the amounts of movement of the pair of movable dies 38. Thereby, a necessary extrusion length can be obtained by controlling the timing of stopping the movable dies 38. By way of example, in FIG. 11, the extrusion length of the third portion 27c, 27d is represented by "Lb," "Ld." The speed of extrusion of the shaped product 27 in the extrusion of the third portion 27c is progressively reduced, but the speed of extrusion is progressively increased in the extrusion of third portion 27d.

According to the second embodiment, in the cutting-off step, the shaped product 27 formed as described above is cut off at an axially middle position of the respective first portion 27a and at an axially middle position of the respective second portion 27b. Thereby, a plurality of materials 28 are formed, one of which is shown in FIG. 12. The respective material 28 is formed to a predetermined length corresponding to the length of the bolt 1 desired to be formed. In addition, the respective material 28 includes a regular hexagonal columnar portion corresponding to the first portion 27a and the third portion 27c (or 27d) and second portion 27b continuing to the first portion 27a.

Then, in the cutting step, the regular hexagonal columnar portion corresponding to the first portion 27a of the respective material 28 is used as it is as the bolt head 3 (see FIG. 1), the second portion 27b and the third portion 27c (or 27d) are cutting-processed. In this case, the round columnar portion corresponding to the outer circumference of the axial portion 2 (see FIG. 1) of the bolt 1 is formed by the cutting process of the second portion 27b and the third portion 27c (or 27d). Thereafter, screw threads are cut-formed on the outer circumference surface of the round columnar portion, thereby to form the screw portion 4 (see FIG. 1). In this manner, the respective bolt 1 is formed.

As described above, according to the second embodiment, in the cutting step, the regular hexagonal columnar portion corresponding to the first portion 27a is used as it is as the bolt head 3. More specifically, the regular hexagonal columnar first portion 27a, which has been formed by extrusion, can be used as it is as the bolt head 3, such that a step of cut-forming the bolt head 3 can be eliminated, and the material yield can be prevented from being reduced due to the cutting process.

Further, according to the second embodiment, the bolt 1 is formed by performing the cutting process of the second portion 27b and the third portion 27c (or 27d) that are smaller in width than the first portion 27a used as the bolt head 3. As such, compared to a case where the bolt 1 is formed by cutting process of a material having a constant width identical to the first portion 27a along the extrusion direction, the amount of cutting can be reduced. Thereby, the reduction in the material yield can be even more restrained.

Further, in the forming apparatus 30 and manufacturing method for the shaped product 27 in accordance with the second embodiment, after the regular hexagonal columnar first portion 27a is formed by the movable dies 38 at the predetermined position on the downstream side along the extrusion direction in the shaping opening 40, the extrusion is performed while the movable dies 38 is being moved along the guide grooves 42 in toward the side (upstream side) where the distance therebetween reduces. Consequently, the third portion 27d having the width gradually reducing from the first portion 27a can be formed; and thereafter, the extrusion is performed by stopping the movable dies 38, thereby being able to form the second portion 27b. Alternatively, the third and first portions 27c and 27a can be continually extruded from the second portion 27b in the steps reversed in the order. Consequently, according to the forming apparatus 30 and forming method of the second embodiment, the shaped product 27 including the repetitious sets of the first portion 27a, third portion 27c (or 27d), and second portion 27b provided along the extrusion direction can be easily formed by repeating the forming steps described above.

Further, according to the second embodiment, a width variation rate can be varied by changing the movement speed of the movable dies 38, so that the sufficient degree of design freedom for the shaped products 27 can be improved.

Effects and advantages other than the above of the second embodiment are similar to those of the first embodiment.

The embodiments are disclosed above by way of examples in all respects and should not be construed to be restrictive. The scope of the present invention is not defined by description of the embodiments, but is defined only by the appended claims.

For example, according to the manufacturing process of the respective embodiment described above, while the shaped product 7 (or 27) formed in the extruding step is cut off to the plurality of materials 8 (or 28) in the cutting-off step, and the bolt 1 is formed from the respective materials 8 (or 28), the process is not limited thereto. The manufacturing process can be such that a shaped product having the same length as the bolt 1 is extruded in the extruding step, and the shaped product is subjected to the cutting process, thereby to form the bolt 1. Thus, eliminating the cutting-off step, the shaped product formed in the extruding step is directly subjected to the cutting process, thereby to form the bolt 1.

It should be understood by those skilled in the art that various modifications, combinations, sub-combinations, and alternations may occur depending on the design requirements and other factors insofar as they are within the scope of the appended claims.

## Claims

1. An extrusion apparatus (30) for forming a bolt-dedicated shaped product (27), the apparatus comprising:
a fixed die (36) including a shaping opening (40) including a plurality of guide grooves (42) extending along a direction tilted with respect to the extrusion direction; and
a pair of movable dies (38) disposed to be movable along the respective guide grooves (42) and to clamp the shaped product (27) from both sides,
wherein the pair of movable dies (38) are apart from one another at a distance variable in association with movement thereof along the respective guide grooves (42), thereby to form a regular hexagonal column corresponding to a first portion (27a) to be extruded at a predetermined position along the extrusion direction in the shaping opening (40).

2. A method for forming a bolt-dedicated shaped product (27), the method using the forming apparatus (30) according to claim 1,
wherein, after a first portion (27a) has been extruded in the state of the pair of movable dies (38) stopped at the predetermined position, a third portion (27c, 27d) is extruded while the pair of movable dies (38) is being moved along the guide grooves (42) in the direction of reducing the distance therebetween; and
thereafter, a second portion (27b) is extruded by stopping the pair of movable dies (38).

3. The method for forming a bolt-dedicated shaped product (27) as claimed in claim 2, wherein a variation rate of the width of the third portion (27c, 27d) is varied by varying a movement speed of the pair of movable dies (38).

## Patentansprüche

1. Strangpressvorrichtung (30) zum Formen eines schraubenförmigen Vorprodukts (27), wobei die Vorrichtung umfasst:
eine feststehende Matrize (36), die eine Formgebungsöffnung (40) umfasst, welche eine Mehrzahl von Führungsrillen (42) umfasst, die sich entlang einer Richtung erstrecken, die bezogen auf die Strangpressrichtung geneigt ist, und
ein Paar von bewegbaren Matrizen (38), die so angeordnet sind, dass sie entlang der jeweiligen Führungsrillen (42) bewegbar sind und das Formprodukt (27) von beiden Seiten klemmen,
wobei das Paar von bewegbaren Matrizen (38) mit einem Abstand voneinander entfernt ist, der einhergehend mit deren Bewegung entlang der jeweiligen Führungsrillen (42) variabel ist, wodurch eine regelmäßige sechseckige Säule, die einem ersten strangzupressenden Abschnitt (27a) entspricht, an einer vorgegebenen Position entlang der Strangpressrichtung in der Formgebungsöffnung (40) gebildet wird.

2. Verfahren zum Formen eines schraubenförmigen Vorprodukts (27), wobei in dem Verfahren die Formgebungsvorrichtung (30) nach Anspruch 1 eingesetzt wird, wobei, nachdem ein erster Abschnitt (27a) in dem Zustand stranggepresst worden ist, bei dem das Paar von bewegbaren Matrizen (38) bei der vorgegebenen Position angehalten worden ist, ein dritter Abschnitt (27c, 27d) stranggepresst wird, während das Paar von bewegbaren Matrizen (38) entlang der Führungsrillen (42) in der Richtung einer Verminderung des Abstands zwischen diesen bewegt wird, und danach ein zweiter Abschnitt (27b) durch Anhalten des Paars von bewegbaren Matrizen (38) stranggepresst wird.

3. Verfahren zum Formen eines schraubenförmigen Vorprodukts (27) nach Anspruch 2, wobei die Variationsrate der Breite des dritten Abschnitts (27c, 27d) durch Variieren der Bewegungsgeschwindigkeit des Paars von bewegbaren Matrizen (38) variiert wird.

## Revendications

1. Appareil d'extrusion (30) destiné à former une préforme de boulon (27), l'appareil comprenant :
une matrice fixe (36) comportant une ouverture de formage (40) comprenant une pluralité de rainures de guidage (42) s'étendant le long d'une direction inclinée par rapport à la direction d'extrusion ; et
une paire de matrices mobiles (38) disposées de manière à être mobiles le long des rainures de guidage respectives (42) et pour serrer la préforme (27) des deux côtés, où la paire de matrices mobiles (38) sont éloignées l'une de l'autre d'une distance variable en association avec leur mouvement le long des rainures de guidage respectives (42), de manière à former une colonne hexagonale régulière correspondant à une première partie (27a) à extruder au niveau d'une position prédéterminée le long de la direction d'extrusion dans l'ouverture de formage (40).

2. Procédé destiné à former une préforme de boulon (27), le procédé utilisant l'appareil de formage (30) selon la revendication 1,
dans lequel, après qu'une première partie (27a) a été extrudée à l'état où la paire de matrices mobiles (38) sont arrêtées à la position prédéterminée, une troisième partie (27c, 27d) est extrudée tandis que la paire de matrices mobiles (38) se déplace le long des rainures de guidage (42) dans la direction de réduction de la distance entre celles-ci ; et
par la suite, une deuxième partie (27b) est extrudée par l'arrêt de la paire de matrices mobiles (38).

3. Procédé destiné à former une préforme de boulon (27) tel que revendiqué dans la revendication 2, dans lequel un taux de variation de la largeur de la troisième partie (27c, 27d) est variable en faisant varier la vitesse de déplacement de la paire de matrices mobiles (38).
